Europäisches Patentamt

European Patent Office

Office européen des brevets

(19)

(11) Publication number: **0 116 022**
**B1**

(12) # EUROPEAN PATENT SPECIFICATION

(45) Date of publication of patent specification: **08.06.88**

(51) Int. Cl.⁴: **G 01 C 19/32**

(21) Application number: **84850007.0**

(22) Date of filing: **09.01.84**

(54) Aircraft attitude indicator.

(30) Priority: **07.01.83 SE 8300065**

(43) Date of publication of application:
**15.08.84 Bulletin 84/33**

(45) Publication of the grant of the patent:
**08.06.88 Bulletin 88/23**

(84) Designated Contracting States:
**AT CH DE FR GB IT LI**

(56) References cited:
**FR-A- 817 732**
**FR-A-1 205 406**
**FR-A-1 274 465**
**GB-A- 990 740**
**US-A-3 516 055**
**US-A-4 138 661**

(73) Proprietor: **SAAB-SCANIA Aktiebolag**
**S-581 88 Linköping (SE)**

(72) Inventor: **Nordström, Lennart Knut**
**Liljegatan 13**
**S-58263 Linköping (SE)**

(74) Representative: **Rustner, Lars et al**
**SAAB-SCANIA AB Patent Department**
**S-581 88 Linköping (SE)**

Courier Press, Leamington Spa, England.

## Description

Field of the Invention

This invention relates to attitude indicating instruments for aircraft and is more particularly concerned with improvements in an attitude indicator that provides information about the pitch and roll attitudes of the carrying aircraft and may also provide information about its directional attitude or heading, and wherein the display of attitude information is in the form of a surface of revolution, with a delineation of regularly spaced meridians on said surface that maintain a vertical orientation in space and regularly spaced parallels transverse to the meridians, one of said parallels being an equator that divides the surface into upper and lower halves and corresponds to a horizon.

Background of the Invention

An aircraft attitude indicator of the general type to which this invention relates is disclosed in U.S. patent No. US—A—3.516.055. However this indicator does not appear to show any spaced meridians. Attitude instruments embodying the principles disclosed in that patent are in substantial commercial use. Accordingly, a familiarity with that patent and generally with three-axis attitude indicators is assumed in the following explanation.

In general, such an attitude indicator has a spherical display that is gyro controlled so that regularly spaced meridians delineated on the spherical display are maintained in a vertical orientation in space to show roll attitude; and regularly spaced parallels that are transverse to the meridians are orientated to show the pitch attitude.

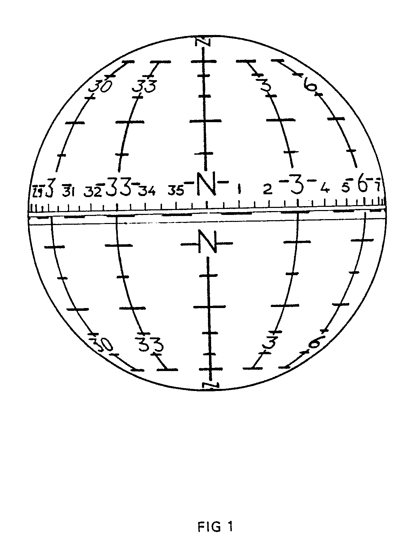

Such a prior display is illustrated in Fig. 1. One of the delineated parallels is an equator that divides the displayed sphere into upper and lower hemispheres and corresponds to the horizon. Relatively fixed to the aircraft in substantially centered relation to the display is an indicator or reference that symbolizes the carrying aircraft and relates its attitude to the attitude of the delineated meridians and parallels on the displayed sphere. Typically this reference takes the form of a circle or dot that symbolizes the fuselage of the carrying aircraft to denote pitch and heading attitudes together with aligned horizontal dashes or bars at opposite sides of the circle or dot that symbolize the wings and show roll or banking attitude. In level flight the airplane symbol is on the equator delineation of the spherical display, and attitudes of climb or dive are indicated by departures of the equator from that symbol, which departures correspond in direction and magnitude to the direction and magnitude of departure of the longitudinal axis of the aircraft from its normal level flight attitude. In like manner, roll attitudes are depicted by the angle between the equator and the wing symbols of the reference.

Thus, the equator of the spherical display provides a horizontal reference to which the pilot relates the attitude of the aircraft in the same way that he relates aircraft attitude to the natural horizon under visual flight conditions. The meridian delineations of the display can be marked in terms of compass headings and can be confined to fixed orientations in space so that the instrument can combine pitch and roll information with information that would otherwise have to be obtained from a separate directional gyro instrument. In a steep dive or climb under visual flight conditions the pilot cannot see the horizon by looking forward but must orient himself by looking to one side or the other to find the horizon. However, the presentation on a conventional spherical display attitude indicator is analogous to what the pilot could see if restricted to forward vision under visual flight conditions. Consequently there are ranges of diving and climbing attitudes in which the equator line of the attitude display is only partly visible at one side of the display, or is not visible at all. What this means, in practical effect, is that the heretofore conventional attitude indicator gives the pilot the least information about the attitude of his aircraft under precisely those conditions of manoeuvering flight in which he most needs to have information that will orient him.

Two further aircraft indicators of the general type are disclosed in the GB patent No. GB—A—990 740 and the FR patent FR—A—1 205 406. Both of them have disadvantages like those pointed out for the indicator disclosed in the US patent US—A—3 516 055, namely that in extreme diving or climbing attitudes, when the equatorline is not visible at all, the solutions to present what is the "up" direction are very primitive. It will take too long time for the pilot, even if he knows where the equatorline is, to interpret which way is "up" without any distinct and unambiguous indication of the "up" direction.

The same disadvantages are present in two other indicators disclosed in FR—A—12 744 65 and FR—A—817 732. The first one comprises a gyro-controlled display with a surface very similar to the one illustrated in fig. 1. It differs from the one shown in fig. 1 in that also the parallels are solid lines. The surface comprises an equator line in the shape of a slit between the upper and lower halves of the sphere. There are also indicating means fixed to the indicator housing that relates to the attitude of the aircraft to the meridians and parallels. The second publication comprises a display surface without spaced meridians and parallels but with some pointer indicia on the lower semi-hemisphere whose pointing apexes are located on the equator line. There are no pointer indicia on the rest of the lower semi-hemisphere which means that in a steep dive there will be no pointer indicia visible on that part of the display surface.

Stated very simply, a conventional attitude indicator tells the pilot where the horizon is, but in steeply climbing and steeply diving flight it does not clearly tell him which way is "up" and thus leaves him without the information that he most needs for recovery from his abnormal attitude. Of course "up" and "down" information is not critically important in a steep climb, but it is absolutely essential for successful recovery from a steep dive. The failure of heretofore conventional attitude indicators to provide such information has been particularly troublesome in manoeuvers that combined roll with a diving angle of more than 45°. In fact, investigation has shown that crashes and near-accidents have resulted from misinterpretation of the information presented by prior attitude indicators, which is to say that such indicators did not clearly and unambiguously present the information most needed, or did not present that information at all.

From the fact that attitude indicators of the above described type have been in use through decades, and the further fact that losses of life and of aircraft are known to have resulted from the deficiencies of prior attitude indicating instruments, it is apparent that the solution to the problem posed by such indicators has not been obvious to those skilled in the art.

Summary of the Invention

In general, the object of this invention is to provide an aircraft attitude indicator with a gyro controlled display which presents vital information not readily available from heretofore conventional attitude indicators and which, in particular, presents a clear and unambiguous indication of the "up" direction when the carrying aircraft is in steeply diving attitudes.

Another and very important object of this invention is to provide an attitude indicator of the character described wherein the display that is movable relative to the aircraft cooperates, during steep dives, with the conventional relatively fixed indicator means to provide a clear and unambiguous indication of the "up" orientation relative to the earth's surface, along with clear information, especially useful in a rolling dive, about the direction of roll that will bring the aircraft most quickly out of the dive.

Thus, simply stated, the invention has as its object to provide an attitude indicator for an airplane whereby the pilot is informed, when in a steep rolling dive, both which way is "up" and how to get away from "down" most quickly.

In general, these and other objects of the invention that will appear as the description proceeds are achieved in the attitude indicator of this invention, which is an instrument carried in an aircraft for displaying the attitude of the aircraft about at least its roll and pitch axes, and which is of the type having a gyro controlled display in the form of a surface of revolution with two degrees of freedom or a computer generated image thereof, on which display there are delineations of regularly spaced meridian lines that maintain a vertical orientation in space and spaced parallels transverse to the meridian lines, one of which is an equator that divides the display into upper and lower halves and corresponds to a horizon, said instrument further comprising indicator means relatively fixed with respect to the aircraft and substantially centered on said display, delineating a reference that relates the attitude of the aircraft to said meridian lines and parallels. The instrument of this invention is characterized by a plurality of pointer indicia on the lower half of said display, each having a pointing apex which points towards said equator and which thus cooperates with said reference to provide an unambiguous and self-explanatory indication of the "up" direction relative to the earth, and said pointer indicia being delineated at regular intervals from one another along said meridian lines and parallels, to cooperate with said reference in providing said "up" indication in all diving attitudes of the aircraft.

Preferably the pointer indicia are triangles of a solid colour that contrasts with the background color of the lower hemisphere and are arranged along at least two of the parallels in said lower half of the display, with the indicia along each parallel having their bases on that parallel, and with like numbers of such indicia on the respective parallels.

Brief Description of Drawings

In the accompanying drawings, which illustrate what are now regarded as preferred embodiments of the invention:

Fig. 1 illustrates the display presented by a heretofore conventional aircraft attitude indicator, as described hereinabove;

Fig. 2 is a view of an attitude indicator of this invention, as seen by the pilot of an aircraft in which it is installed, shown as it appears in straight and level flight;

Fig. 3 is a perspective view showing diagrammatically the suspension of a conventional spherical display;

Fig. 4 is a schematic diagram of an electromechanical embodiment of a three-axis attitude indicators;

Fig. 5 is a schematic diagram of apparatus for producing a computer generated spherical display;

Fig. 6 is a view generally like Fig. 2 but showing the display as it appears in a steep rolling dive;

Figs. 7 and 8 illustrate modified embodiments of the spherical display that characterizes the attitude indicator of this invention; and

Fig. 9 illustrates another embodiment of the attitude indicator of this invention comprising a cylindrical display.

Detailed Description of Preferred Embodiments of the Invention

An aircraft attitude indicator of this invention is conventional in that it has a gyro controlled display 2, visible through a window or opening 3 that is of substantially the same dimensions as the display and concentric to it. The display has markings as described hereinafter whereby rotations about its coordinate axes are made apparent.

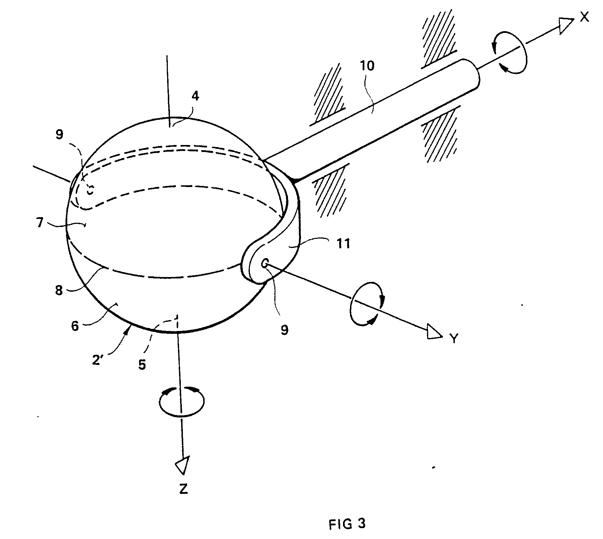

In the general arrangement illustrated in Fig. 3, the display comprises a physical sphere 2', the surface of which is divided into upper and lower hemispheres 6, 7 by an equator 8 which corresponds to the horizon. The sphere is suspended by means of a shaft (not shown) which extends horizontally between two bearings 9 in the direction Y in the figure. The bearings and therewith the sphere are gimbal mounted on a fork comprising a rotatable shaft 10 that extends in the direction X which is parallel to the longitudinal or roll axis of the carrying aircraft. To the shaft 10 is symmetrically fixed a half-ring 11 in which the bearings 9 are mounted, whereby the sphere can swing relative to the half-ring 11 about the Y-axis independently of rotational movements about the X-axis.

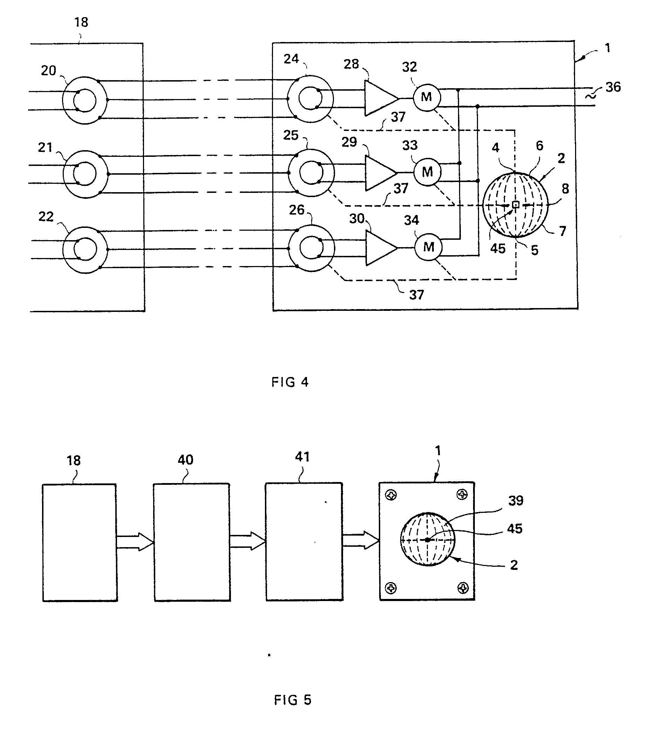

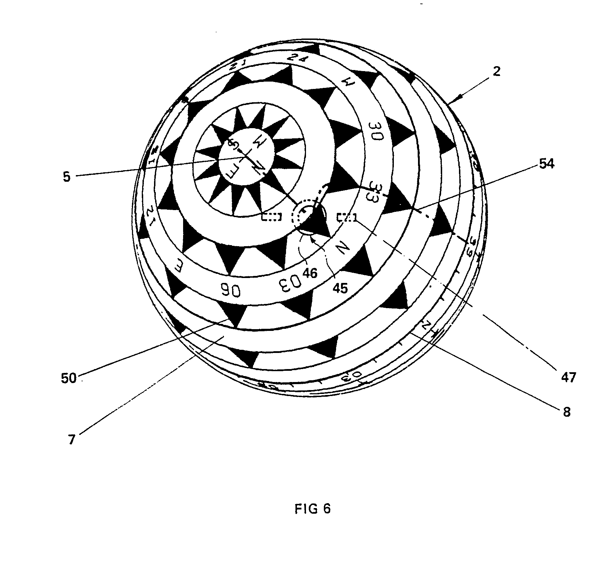

Rotations of the sphere 2' about the two axes can be achieved by a control system comprising gyro sensing means which senses the attitude of the aircraft in pitch and roll and emits control signals to a mechanism which adjusts the position of the display accordingly. By means of servo loops the display will be controlled in a known manner so that the Y-axis maintains its true horizontal attitude and the equator 8 shows the attitude in roll, while the sphere is rotated about said Y-axis so that the visible surface of the display gives the pilot a true representation of the aircraft attitude in pitch. Although the control system and its mechanism forms no part of this invention two embodiments thereof will be briefly described in the following with reference to Figs. 4 and 5.

Fig. 4 discloses a form of the control mechanism wherein the display comprises a three-dimensional sphere 2, again consisting of hemispherical shells 6, 7 divided by an equator 8 and having a gimbal mounting, as described above. The display is controlled by gyros which are mounted on a separate gyro platform 18 that can be located remotely from the attitude indicator and can comprise, for example, the gyro platform of an inertial navigation system. Pitch, roll and yaw displacements of the gyro platform 18 are picked up by sensors 20, 21, 22, which can comprise synchro transmitters and which produce electrical signals corresponding to the attitude of the aircraft that are fed to respective control transformers 24, 25, 26. The outputs of the respective transformers, passed through amplifiers 28, 29, 30, are employed for control of respective servo motors 32, 33, 34 that are energized from a current source 36. The servo motors drive the sphere 2' about the respective lateral, longitudinal and vertical axes. Feedback loops 37 ensure that the relative attitude of the display is in accurate correspondence with the outputs of the transformers 24, 25, 26. The electromechanical display embodiment just described avoids problems due to mass and kinetic forces at the display itself that would arise if the gyro sensing means is located internally of the display.

Alternatively, the display can be a computer generated image of a sphere, a cylinder or another three-dimensional body and can be presented on a cathode ray tube 39 or the like by means of apparatus such as is schematically illustrated in Fig. 5, wherein 18 designates a gyro platform with sensors from which signals corresponding to relative displacements about the three axes are fed to a signal processing unit 40. The output of the signal processing unit 40 is fed to an image generating unit 41 which controls the display at the display unit 39 that is seen by the pilot.

Irrespective of the particular nature of the visible display or the mechanism by which it is presented, an attitude indicator of this invention comprises an indicator means or reference 45 that delineates a stylized airplane in the form of a central dot or circle 46 with horizontally aligned bars 47 at its opposite sides, as is generally conventional. Since the pilot "flies" the reference 45 relative to the display 2, he regards the reference, for practical purposes, as fixed in relation to the carrying aircraft. However, the indicator means 45 is not fixed in the aircraft in an absolute sense; it is at least manually adjustable vertically, to accommodate varying conditions of nose-up and nose-down trim; it may be adjustable laterally for special manoeuvers (e.g., tactical manoeuvers); and it may be caused to move automatically to some extent for special flight situations. Thus the reference indicator means 45 is herein said to be relatively fixed with respect to the carrying aircraft, and making allowance for its limited mobility, it can be said to be substantially centered on the spherical display 2.

In whatever form the spherical display 2 is presented, there are delineated on the sphere meridians 48 which extend from zenith 4 to nadir 5 and maintain a vertical orientation in space, and parallels 49 which lie in planes normal to the polar axis of the sphere, the axis Z in Fig. 3. The meridians 48 are preferably spaced at regular angles with respect to said axis and around the visable surface of the display; and where the instrument presents heading or directional attitude information in addition to pitch and roll information, there will be suitable compass direction indicia on the meridians, preferably along the equator 8 and along a medial parallel in each hemisphere, as shown. All the parallels 49 are delineated at regularly spaced intervals at each side of the equator.

According to the invention, the visable presentation 2 is further provided with pointer indicia 50 that cooperate with the reference 45 to provide an unambiguous and self-explanatory indication of the "up" direction. These pointer indicia 50 are preferably triangles, with apexes pointing upwardly; but it will be understood that other pointer configurations would be suitable, such as inverted V's that have their apexes upward.

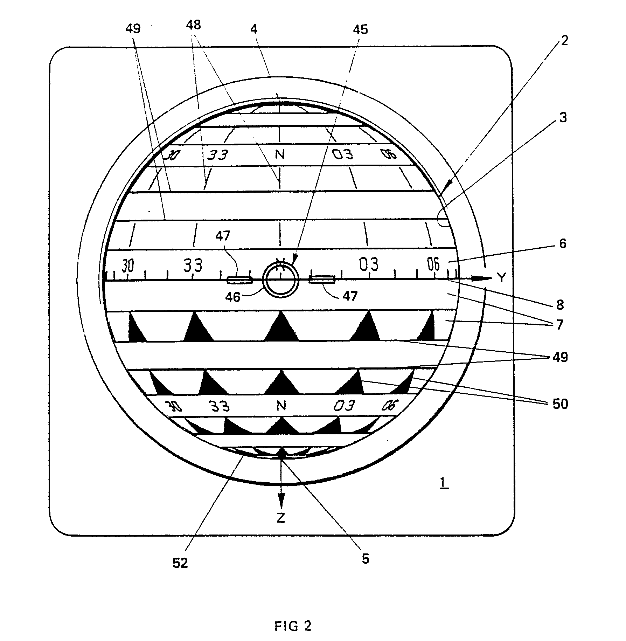

In the embodiment illustrated in Fig. 2 the two hemispheres 6, 7 of the spherical presentation have the same background color (e.g., white), and the lower hemisphere 7, which is predominantly visible to the pilot during a dive, is immediately distinguishable from the upper one by the fact that the pointer indicia 50 are present only on it. The indicia 50, like the meridian and parallel delineations, are in a color that is in contrast to the background color of the sphere. As shown in Fig. 2, the parallels or latitude delineations 49 are in full lines, at 10° intervals, and the meridians or longitude markings 48 are at 30° intervals and are delineated in the upper hemisphere 6 by broken lines which are interrupted at the parallels. In this case the meridian lines are imaginary in the lower hemisphere but are nevertheless well defined for the pilot by reason of every pointer indicium 50 being symmetrical to an extension of a meridian line 48 delineated in the upper hemisphere 6, with its apex on that line. Furthermore, the pointer indicia 50 are arranged in horizontally aligned sets that are spaced apart by 20° of latitude, and in every set there is a pointer indicium on each of the meridians' 48 that are delineated in the upper hemisphere. In this case, each pointer indicium is a solid-color trinagle that has its base coinciding with one delineated parallel 49 and has its apex on the next delineated parallel nearer the equator, and all of the indicia are of like size except those nearest the nadir point 5, which are narrower and are connected with one another to form a compass rose 52.

Fig. 2 shows the display as it appears to the pilot in straight and level flight, while Fig. 6 shows it as it would appear in a partially inverted attitude of the aircraft in a steep rolling dive. In Fig. 6, note that the equator 8 is barely visible at the edge of the window, in the lower right hand quadrant, corresponding to the limited view of the horizon that the pilot would have under the same conditions. However, the indicium 50 that is nearest the reference 45 clearly designates the "up" direction and signifies the partially inverted attitude of the aircraft. Equally important, the indicia adjacent to the one under the reference marker 45 clearly signify the consequences of any change in attitude. Thus it is apparent from the indicia to the left of the reference 45 that rolling to the left would steepen the dive before recovery from it could begin, whereas it is apparent from the indicia to the right of the reference 45 that recovery to level flight can be obtained most quickly by a sharp roll to the right followed by a straight pull-up, to carry the aircraft through the progression of attitudes denoted by the broken line 54. In like manner, the consequences of a slower roll to the right can be readily visualized from the indicia aligned along the "30" meridian.

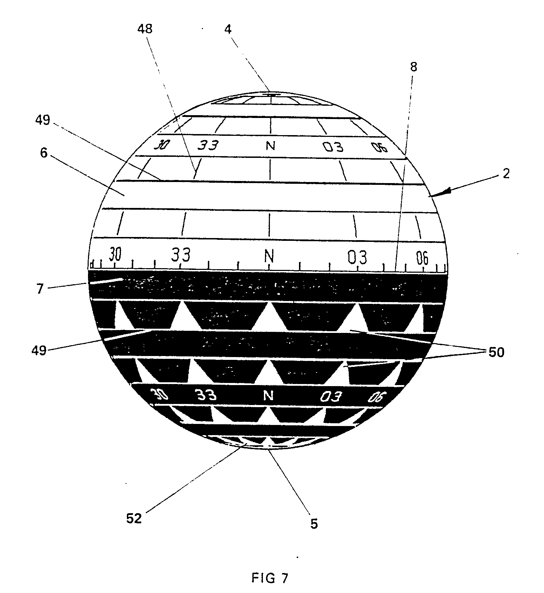

The embodiment of the invention illustrated in Fig. 7 is basically like that of Fig. 2 but the background color of the lower hemisphere is dark while the indicia 50 on it are of a contrasting light color, as is the upper hemisphere. In Fig. 7, too, the sets of pointer indicia 50 are of progressively decreasing width away from the equator.

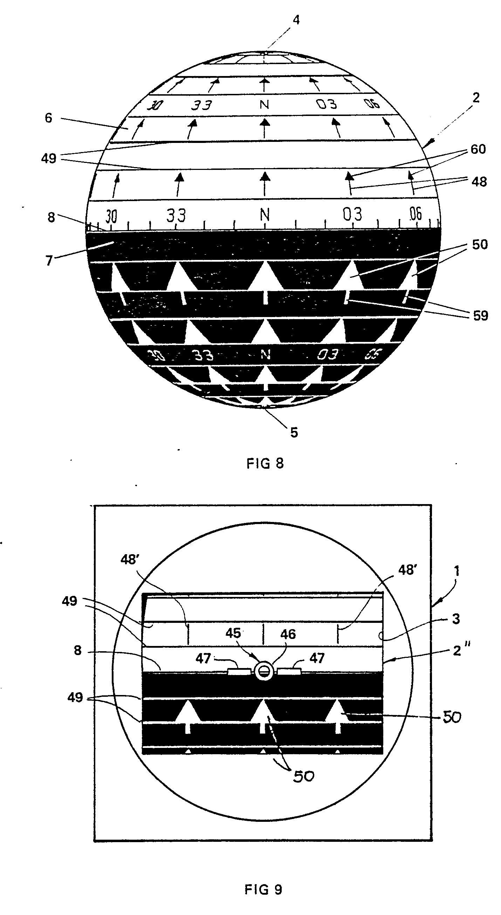

Fig. 8 illustrates another variant form of the spherical display 2 which is generally like that of Fig. 7, but wherein the pointer indicia 50 of alternate sets in the lower hemisphere 7 have shaft-like appendages 59, to have an arrowhead form, and these appendages define broken meridian lines. Further in Fig. 8 the dashes of the broken meridian lines 48 in the upper hemisphere 6 terminate at their upper ends in small triangles 60 that have their apexes uppermost, so that "up" orientations are provided in steep climbs as well as in dives. Because the background colors of the two hemispheres 6, 7 are different and contrasting, and the triangular indicia 60 in the upper hemisphere are much smaller than those in the lower hemisphere, climb indications are distinctly different from dive indications.

Fig. 9 illustrates another embodiment of the attitude indicator of this invention wherein the display 2" is in the form of a surface of revolution on a physical body. Preferably the body is cylindrical but in a variant form it can be an ellipsoid, i.e. a solid of revolution having an elliptical longitudinal section, or a frustum of such solid. The body is suspended on a shaft corresponding to the pitch axis (Y in Fig. 3) and which extends concentrically with the axis of revolution of the display surface, and is further gimbal mounted so that the body can swing about the roll axis (X in Fig. 3) which is perpendicular to said shaft.

On the display surface is a delineation similar to the one described above with reference to Figs. 7 and 8 and comprising equally spaced meridian lines 48' which extend parallel to one another and lye in planes which are perpendicular to said shaft and axis of revolution. Also here the delineation further comprises a plurality of parallels 49 extending axially on the surface of revolution and of which one is the equator 8. Relatively fixed to the housing of the instrument 1 is a reference 45 of the kind described before.

The instrument of this embodiment can thus be controlled by a gyro sensing means and a mechanism of the general construction described above, so that the attitude in pitch and roll of the aircraft is visible through the delineation on display surface 2" relative to the reference 45.

In accordance with the characteristic feature of this invention the display 2" further comprises a plurality of pointer indicia 50 on the display surface. The indicia which can be of any suitable shape and color to provide an unambiguous and self-explanatory indication of the "up" direction are delineated on the lower half of the display surface at regular intervals and preferably, as shown in the figure, they are equally spaced from one another in the axial direction, along the parallels 49, as well as in the radial direction, along the meridian lines 48. In cooperation with the reference 45 the pointer indicia will also in this embodiment provide the "up" indication in all diving attitudes of the aircraft.

The attitude indicator of this invention was tested in actual flight comparisons to a conventional attitude indicator with a spherical display by nine experienced pilots, who rated the two types of indicators on the following scale:

1. Very good
2. Good
3. Acceptable
4. Acceptable with reservations
5. Unacceptable

Notwithstanding their unfamiliarity with the indicator of this invention, the average of their ratings for it was 2.6, whereas the average of their ratings for the conventional indicator was 3.5; that is, they judged the indicator of this invention to be substantially better than the conventional one.

From the foregoing description taken with the accompanying drawings it will be apparent that this invention provides an improved aircraft attitude indicator of the type having a display on which meridians and parallels are designated, whereby the instrument achieves a capability for presenting, in a clear and unambiguous manner, critically important orientation information not available from prior instruments of that type. It will also be apparent that the marked advantages of the invention, which substantially contribute to flight safety, are achieved without a significant increase in the cost of the instrument.

**Claims**

1. An instrument carried in an aircraft for displaying the attitude of the aircraft about its pitch and roll axes, said instrument (1) being of the type having a gyro-controlled display (2) in the form of a surface of revolution with two degrees of freedom or a computer generated image thereof, on which display there are delineations of regularly spaced meridian lines (48) that maintain a vertical orientation relative to the earth and spaced parallels (8, 49) transverse to the meridian lines, one of which is an equator (8) that divides the display (2) into upper and lower halves (6, 7) and corresponds to a horizon, said instrument further comprising indicator means (45) relatively fixed with respect to the aircraft and substantially centred on said display (2) delineating a reference that relates the attitude of the aircraft to said meridian lines (48) and parallels (8, 49), said instrument being characterized by a plurality of pointer indicia (50) on the lower half (7) of said display, each having a pointing apex which points towards said equator (8), and which thus cooperates with said reference to provide an unambiguous and self-explanatory indication of the "up" direction relative to the earth, said pointer indicia (50) being delineated at regular intervals from one another along said meridian lines (48) and parallels (49), to cooperate with said reference (45) in providing said "up" indication in all diving attitudes of the aircraft.

2. The instrument of claim 1, characterized in that each of said pointer indicia (50) is substantially triangular, with a base on one of said parallels (49) and which base faces away from said equator and with the apex on one of said meridian lines (48).

3. The instrument of claim 1 or 2, wherein the display (2) is spherical and comprises meridians (48) extending between its zenith and nadir points (4, 5), characterized in that the pointer indicia (50) are of a width which decreases from the equator (8) toward the nadir point (5).

4. The instrument of any of claims 1-3, characterized in that each of said pointer indicia (50) is of a color that contrasts with the background color of said lower half (7) of the display (2).

5. The instrument of claim 4, characterized in that said background color is dark while the pointer indicia (50) thereon and the upper half (6) of the display (2) is of a contrasting light color.

**Patentansprüche**

1. Instrument, welches von einem Flugzeug zur Anzeige der Lage des Flugzeuges in bezug auf seine Quer- und Längsachsen mitgeführt wird, daß Instrument (1) von der Art ist, welches eine kreiselgesteuerte Anzeige (2) in Form einer drehenden Oberfläche mit zwei Freiheitsgraden oder ein rechnererzeugtes Bild aufweist, wobei auf der Anzeige Begrenzungen in Form regelmäßig voneinander beabstandeter Längskreislinien (48) vorhanden sind, die eine vertikale Ausrichtung relativ zur Erde beibehalten, und voneinander beabstandete Parallelen (8, 49) quer zu den Längskreislinien, von denen eine ein Äquator (8) ist, der die Anzeige (2) in obere und untere Hälften (6, 7) teilt und einem Horizont entspricht, und daß das Instrument weiterhin ein Anzeigemittel (45) umfaßt, das in bezug auf das Flugzeug und im wesentlichen mittig auf der Anzeige (2) befestigt ist, und einen Festpunkt festlegt, der einen Bezug der Lage des Flugzeugs zu den Längskreislinien (48) und den Parallelen (8, 49) herstellt, dadurch gekennzeichnet, daß eine Mehrzahl von Ablesemarkierungen auf der unteren Hälfte der Anzeige vorhanden ist, wobei jede von ihnen einen Ablesescheitel aufweist, der auf den Äquator (8) zeigt und der somit it dem Festpunkt zusammenwirkt, um eine eindeutige und eigenverständliche Anzeige der "aufwärts" Richtung relativ zur Erde vorsusehen, und daß die Ablesemarkierungen (50) in regelmäßigen Abständen voneinander längs den Längskreislinien (48) und Parallelen (49) festgelegt sind, um mit dem Festpunkt (45) zusammenzuwirken, indem die "aufwärts" Anzeige in allen Sinkfluglagen des Flugzeugs geliefert wird.

2. Instrument nach Anspruch 1, dadurch gekennzeichnet, daß jede der Ablesemarkierungen (50) im wesentlichen dreieckig mit der Basis auf einer der Parallelen (49) ausgebildet ist, wobei die Basis vom Äquator wegsteht und der Scheitel auf einer der Längskreislinien (48) liegt.

3. Instrument nach Anspruch 1 oder 2, bei dem die Anzeige (2) sphärisch ausgebildet ist und Längskreislinien (48) aufweist, die sich zwischen ihren Zenit- und Nadirpunkten (4, 5) erstrecken, dadurch gekennzeichnet, daß die Ablesemarkierungen (50) eine Breite aufweisen, die sich vom Äquator (8) auf den Nadirpunkt (5) zu vermindert.

4. Instrument nach einem der Ansprüche 1 bis 3, dadurch gekennzeichnet, daß jede der Ablesemarkierungen (50) eine Farbe aufweist, die mit der Hintergrundfarbe der unteren Hälfte (7) der Anzeige (2) kontrastiert.

5. Instrument nach Anspruch 4, dadurch gekennzeichnet, daß die Hintergrundfarbe dunkel ist, wohingegen die darauf befindlichen Ablesemarkierungen (50) und die obere Hälfte (6) der Anzeige von kontrastierender heller Farbe sind.

**Revendications**

1. Instrument installé dans un avion et servant à afficher l'attitude de l'avion autour de ses axes de tangage et de roulis, ledit instrument (1) étant du type comportant un dispositif d'affichage (2) commandé par gyroscope, qui se présente sous la forme d'une surface de révolution à deux degrés de liberté ou sou la forme d'une image, produite par ordinateur, de cette surface et qui porte des tracés de méridiens régulièrement espacés (48), qui conservent une orientation verticale par rapport à la terre, et des parallèles espacés (8, 49), qui s'étendent transversalement par rapport aux méridiens et dont l'un forme un équateur (8) qui divise le dispositif d'affichage (2) en des moitiés supérieure et inférieure (6, 7) et correspond à un horizon, ledit instrument comportant en outre des moyens indicateurs (45) qui sont fixes par rapport à l'avion et sont sensiblement centrés sur ledit dispositif d'affichage (2) en représentant une référence qui est associée à l'attitude de l'avion par rapport auxdits méridiens (48) et auxdits parallèles (8, 49), ledit instrument étant caractérisé par une pluralité d'index en pointe (50) situés dans la moité inférieure (7) dudit dispositif d'affichange et comportant chacun une pointe indicatrice qui est dirigée vers ledit équateur (8) et coopère par conséquent avec ladite référence de manière à fournir une indication non ambiguë et explicative par elle-même de la direction "haut" par rapport à la terre, lesdits index en pointe (50) étant tracés à des distances régulières les uns des autres le long desdits méridiens (48) et desdits parallèles (49), de manière à coopérer avec ladite référence (45) pour fournir ladite indication "haut" dans toutes les attitudes de vol en piqué de l'avion.

2. Instrument selon la revendication 1, caractérisé en ce que chacun desdits index en pointe (50) est sensiblement en forme de triangle, dont la base est située sur l'un desdits parallèles (49) et est dirigée à l'opposé dudit équateur, tandis que le sommet est situé sur l'un desdits méridien (48).

3. Instrument selon la revendication 1 ou 2, dans lequel le dispositif d'affichage (2) est sphérique et comporte des méridiens (48) s'étendant entre ses points de zénith et de nadir (4, 5), caractérisé en ce que les index en pointe (50) possèdent une largeur qui diminue depuis l'équateur (8) en direction du point de nadir (5).

4. Instrument selon l'une quelconque des revendications 1-3, caractérisé en ce que chacun desdits index en pointe (50) possède une couleur qui contraste avec la couleur du fond de ladite moitié inférieure (7) du dispositif d'affichage (2).

5. Instrument selon la revendication 4, caractérisé en ce que ladite couleur du fond est noire tandis que les index en pointe (50) situés sur ce fond et la moitié supérieure (6) du dispositif d'affichage (2) possèdent une couleur claire contrastante.

FIG 1

FIG 2

0 116 022

FIG 3

3

FIG 4

FIG 5

FIG 6

FIG 7

FIG 8

FIG 9